(19) **Europäisches Patentamt / European Patent Office / Office européen des brevets**

(11) **EP 3 244 421 A1**

(12) **EUROPEAN PATENT APPLICATION**

(43) Date of publication:
**15.11.2017 Bulletin 2017/46**

(21) Application number: **17162733.4**

(22) Date of filing: **24.03.2017**

(51) Int Cl.:
*H01B 1/24* (2006.01)    *C08L 23/10* (2006.01)
*C08L 69/00* (2006.01)    *C08L 23/16* (2006.01)
*C08L 71/12* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.03.2016  KR 20160037770**
**30.09.2016  KR 20160126580**

(71) Applicants:
• **SK Innovation Co., Ltd.**
  **Seoul 03188 (KR)**
• **SK Global Chemical Co., Ltd.**
  **Seoul 03188 (KR)**

(72) Inventor: **LEE, Yun Kyun**
**34124 Daejeon (KR)**

(74) Representative: **Stolmár & Partner**
**Patentanwälte PartG mbB**
**Blumenstraße 17**
**80331 München (DE)**

(54) **ELECTROCONDUCTIVE RESIN COMPOSITE AND ELECTROCONDUCTIVE RESIN COMPOSITION HAVING EXCELLENT IMPACT STRENGTH, AND METHOD OF PRODUCING THE SAME**

(57)    An electroconductive resin composite includes an impact modifier domains and an electroconductive fillers dispersed therein. The domains are dispersed in a matrix in the form of a domain having an average particle size of 5 $\mu$m or less. The electroconductive fillers are dispersed in the matrix or at an interface between the matrix and the domains to form a network.

**EP 3 244 421 A1**

Description

**CROSS-REFERENCE TO RELATED APPLICATION**

This application claims the benefit of priorities to Korean Patent Application No. 10-2016-0037770, filed on March 29, 2016 and Korean Patent Application No. 10-2016-0126580, filed on September 30, 2016 in the Korean Intellectual Property Office, the disclosures of which are incorporated herein by references in these entireties.

**BACKGROUND**

The present disclosure relates to an electroconductive resin composite and an electroconductive resin composition and a method for producing the same and, more particularly, to an electroconductive resin composite and an electroconductive resin composition having excellent impact strength and a method for producing the same.

In general, various physical properties of polymers may be obtained through molecular design. Polymers also have excellent processability, mechanical strength, electrical insulation, optical transparency, mass productivity, or the like, as compared with other materials, and have been used as important novel materials in various high-tech industrial fields, such as semiconductors, electrical industry, aerospace, defense industry, display, alternative energy, and the like. However, such polymer materials have low thermal energy, mechanical physical properties, as compared with inorganic materials, and thus, there is a need to improve the physical properties of the polymer materials to be used as new materials.

In this aspect, when polymer materials are applied in fields in which electrical conductivity is required, electroconductive fillers are added to the polymer material, in order to provide required conductivity to the polymer material, improving the physical properties thereof. In this case, carbon materials such as carbon nanotubes (CNT) or graphite have been typically used as electroconductive fillers added to provide electrical conductivity to polymer materials.

When additives are included in polymer materials in order to improve such electroconductive or mechanical physical properties, the additive acts as an impurity in a resin composition, commonly resulting in a reduction in the impact strength of the polymer material. In order to enhance such impact strength, impact modifiers are commonly added to the resin composition, along with the electroconductive filler.

According to the related art, as a resin composition for manufacturing a resin composite, incorporating an impact modifier and an electroconductive filler, or manufacturing such a resin composite, an electroconductive masterbatch has been manufactured by melt-mixing a matrix polymer resin, an electroconductive filler, and an impact modifier.

**SUMMARY**

An aspect of the present disclosure may provide a resin composition including an impact modifier and electroconductive fillers in a matrix resin, which may improve impact resistance and conductivity for a resin composite by allowing the impact modifier domains to be dispersing finely and uniformly and allowing the electroconductive fillers to form a network.

According to an aspect of the present disclosure, an electroconductive resin composite comprise a resin matrix, impact modifier domains dispersed in the matrix, the domains having an average particle size of 5 $\mu$m or less (excluding 0) and electroconductive fillers dispersed in the matrix.

The size distribution of the domains may have a standard deviation of 3 $\mu$m or less.

Based on the total weight of the fillers, 90% or more of the fillers may be present in the matrix and at an interface between the matrix and the domains.

Interfacial energy between the domains and the fillers is higher than interfacial energy between the matrix and the fillers.

Based on the total weight of the composite, the domains may be included in an amount of 1 wt% to 40 wt%, and the fillers are included in an amount of 0.1 wt% to 20 wt%.

The matrix may include at least one resin selected from the group consisting of polyamide, polycarbonate, polyacrylonitrile butadiene styrene, polymethyl metacrylate, polyphenylene sulfide, and polyetheretherketone.

The composite may have a notched Izod impact strength of 10 kgfcm/cm to 65 kgfcm/cm.

The domains may include polyolefin elastomer.

The fillers may be at least one selected from the group consisting of carbon nanotubes, carbon black, graphite, graphene, and carbon fibers.

According to another aspect of the present disclosure, an electroconductive resin composition having excellent impact strength may comprise: a resin, and a masterbatch including an impact modifier and electroconductive fillers, wherein, with respect to the fillers, interfacial energy of the impact modifier is higher than interfacial energy of the resin.

The electroconductive resin composition may comprise 0.1 wt% to 50 wt% of the masterbatch based on the total weight of the composition, and wherein the masterbatch may include 1 wt% to 50 wt% of the electroconductive fillers based on the total weight of the masterbatch.

The masterbatch may further include a polymer.

According to another aspect of the present disclosure, a method of producing an electroconductive resin composite having excellent impact strength may comprise: blending a masterbatch including an impact modifier and electroconductive fillers with a resin to prepare an electroconductive resin composition; and melt-mixing the composition to prepare a composite including: a resin matrix including the resin; impact modifier domains including the impact modifier, the domains being dispersed in the matrix and having an average particle size of 5 μm or less; and electroconductive fillers dispersed in the composite.

The method further may comprise melt-mixing the impact modifier, the fillers and a resin to prepare the masterbatch.

The composition may include 1 wt% to 40 wt% of the impact modifier and 0.1 wt% to 20 wt% of the fillers on the total weight of the composition.

## BRIEF DESCRIPTION OF DRAWINGS

The above and other aspects, features, and advantages of the present disclosure will be more clearly understood from the following detailed description, taken in conjunction with the accompanying drawings, in which:

FIG. 1A illustrates dispersion of CNTs in a polymer primarily present in the form of a domain in a resin composite including two types of heterogeneous polymer;
FIG. 1B illustrates dispersion of carbon nanotubes (CNTs) in a polymer primarily present in the form of a matrix in a resin composite including two types of heterogeneous polymer;
FIG. 1C illustrates dispersion of CNTs present at an interface between a matrix polymer and a domain polymer in a resin composite including two types of heterogeneous polymer;
FIG. 2 illustrates a factor for a contact angle measurement method for measurement of interfacial energy;
FIG. 3 illustrates diagrams conceptually illustrating a transition phenomenon of electroconductive fillers, depending on affinity with a polymer;
FIGs. 4A, 4B and 4C are scanning electron microscope (SEM) images of the surface of a resin composite molded article obtained according to Example 2;
FIGs. 5A, 5B and 5C are SEM images of the surface of a resin composite molded article obtained according to Comparative Example 1; and
FIG. 6 is an SEM image of the surface of a resin composite molded article obtained according to Comparative Example 4.

## DETAILED DESCRIPTION

Hereinafter, embodiments of the present disclosure will be described with reference to the attached drawings.

The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

Throughout the specification, it will be understood that when an element, such as a layer, region or wafer (substrate), is referred to as being "on," "connected to," or "coupled to" another element, it can be directly "on," "connected to," or "coupled to" the other element, or other elements intervening therebetween may be present. In contrast, when an element is referred to as being "directly on, " "directly connected to," or "directly coupled to" another element, there may be no other elements or layers intervening therebetween. Like numerals refer to like elements throughout. As used herein, the term "and/or" includes any and all combinations of one or more of the associated, listed items.

It will be apparent that, although the terms 'first,' 'second, ' 'third,' etc. may be used herein to describe various members, components, regions, layers and/or sections, these members, components, regions, layers and/or sections should not be limited by these terms. These terms are only used to distinguish one member, component, region, layer or section from another region, layer or section. Thus, a first member, component, region, layer or section discussed below could be termed a second member, component, region, layer or section without departing from the teachings of the exemplary embodiments.

Spatially relative terms, such as "above," "upper," "below," and "lower" and the like, may be used herein for ease of description to describe one element's relationship relative to another element(s), as shown in the figures. It will be understood that the spatially relative terms are intended to encompass different orientations of the device in use or operation, in addition to the orientation depicted in the figures. For example, if the device in the figures is turned over, elements described as "above," or "upper" relative to other elements would then be oriented "below," or "lower" relative to the other elements or features. Thus, the term "above" can encompass both the above and below orientations, depending on a particular directional orientation of the figures. The device may be otherwise oriented (rotated 90 degrees or at other orientations) and the spatially relative descriptors used herein may be interpreted accordingly.

The terminology used herein describes particular embodiments only, and the present disclosure is not limited thereby. As used herein, the singular forms "a," "an," and "the" are intended to include the plural forms as well, unless the context clearly indicates otherwise. It will be further understood that the terms "comprises," and/or "comprising" when used in this specification, specify the presence of stated features, integers, steps, operations, members, elements, and/or groups thereof, but do not preclude the presence or addition of one or more other features, integers, steps, operations, members, elements, and/or groups thereof.

Hereinafter, embodiments of the present disclosure will be described with reference to schematic views illustrating embodiments of the present disclosure. In the drawings, for example, due to manufacturing techniques and/or tolerances, modifications of the shape shown may be estimated. Thus, embodiments of the present disclosure should not be construed as being limited to the particular shapes of regions shown herein, for example, to include a change in shape resulting from manufacturing. The following embodiments may also be constituted alone or as a combination of several thereof.

The contents of the present disclosure described below may have a variety of configurations, and only a required configuration is proposed herein, but the present disclosure is not limited thereto.

The purpose of the present disclosure is to provide a method of obtaining a resin composite having excellent impact resistance while including an electroconductive filler in order to provide electrical conductivity, a resin composite obtained thereby, and a resin composition for the same.

In general, electroconductive fillers are added to a resin in order to provide electrical conductivity to a polymer material. However, in this case, the added electroconductive fillers significantly degrade impact resistance. Accordingly, an impact modifier is added to suppress deteriorations in impact resistance.

An electroconductive resin composite according to the related art has generally been produced by directly blending and melt-mixing a matrix resin, an impact modifier, and electroconductive fillers. When the impact modifier is simply added to provide impact resistance characteristics, the impact modifier present as domains in the matrix resin are not uniform in size and distribution. Thus, electrical physical properties and an impact resistance effect of the resin composite were not exhibited.

For example, the related art only improves impact resistance of the electroconductive resin composite through adjustment of the content of the added impact modifier or enhances dispersibility through additional mixing of other additives. However, the influence of morphology of the impact modifier, the disposition of the electroconductive fillers, or the like, in the resin composite on the electrical conductivity and the impact resistance has not been considered.

However, the research of the present inventor shows that electroconductive fillers and an impact modifier have, for example, specific morphology in a matrix, and such morphology may be obtained when a matrix resin, an impact modifier and electroconductive fillers are compounded by a specific method, and thus the present disclosure has completed.

The resin composite according to an example may include the impact modifier and the electroconductive fillers uniformly dispersed in the matrix resin, thus increasing impact resistance and electrical conductivity.

In the resin composite, the matrix resin may be a main component of the resin composite, and may be appropriately selected and used according to uses and purposes of the resin composite, but is not limited to the use and purpose. For example, a thermoplastic resin may be used as the matrix resin. In detail, examples of the thermoplastic resin may be polyamide, a polycarbonate resin, a polyester resin, a polystyrene resin, an acrylic resin, a polyacrylonitrile butadiene styrene resin, polymethyl metacrylate, polyphenylene sulfide, or polyetherether ketone, one of which may be used alone, and two or more of which may be mixed for use.

Although the impact modifier is not particularly limited, a material may be suitably applied to exemplary embodiments as long as it has properties similar to those of rubber and may perform an impact resistance function for other resins. As the impact modifier having rubber properties, a thermoplastic elastomer (TPE) may be used. Although it is not particularly limited, examples of the impact modifier may include a polyolefin elastomer (POE), at least one selected from the group consisting of high density polyethylene (HDPE), low density polyethylene (LDPE), linear low density polyethylene (LLDPE), an ethylene-$\alpha$-olefin copolymer such as ethylene octene copolymer, ethylene butene copolymer and the like, modified high-density polyethylene, modified low-density polyethylene, modified linear low-density polyethylene and a modified ethylene-$\alpha$-olefin copolymer modified with a compound selected from the group consisting of $\alpha$, $\beta$-unsaturated dicarboxylic acids and $\alpha$, $\beta$-unsaturated dicarboxylic acid derivatives; at least one polystyrene elastomer selected from the group consisting of a block copolymer comprised of an aromatic vinyl compound and a conjugated diene compound, a hydrogenated block copolymer obtained by hydrogenating a block copolymer comprised of an aromatic vinyl compound and a conjugated diene compound, a modified block copolymer obtained by modifying the block copolymer with a compound selected from the group of $\alpha$, $\beta$-unsaturated dicarboxylic acids and $\alpha$, $\beta$-unsaturated dicarboxylic acid derivatives, and a modified hydrogenated block copolymer obtained by modifying the hydrogenated block copolymer with a compound selected from the group of α, β-unsaturated dicarboxylic acids and α, β-unsaturated dicarboxylic acid derivatives; a thermoplastic styrenic block copolymer (TPS) such as styrene-ethylene-butadiene-styrene (SEBS), styrene-butadiene-styrene (SBS), styrene-ethylene-propylene-styrene (SEPS), or SEPS-V; thermoplastic polyurethane (TPU); a thermoplastic polyester-based polymer (TPEE); a vinyl chloride resin; an acrylic copolymer such as ethylene ethyl acrylate (EEA), ethylene methacrylate (EMA) or the like; thermoplastic polyamide (TPAE); and the like.

Among the above-mentioned impact modifiers, the POE is more desirable. The POE may be a copolymer of ethylene and α-olefin, and may have a density of 0.900 g/cm$^3$ or less. It may be more desirable that the density of the POE range from 0.857 g/cm$^3$ to 0.885 g/cm$^3$, and that the melt index (MI) of the POE range from 0.5 g/min to 30 g/min (190°C, 2.16 kg).

Further, the electroconductive fillers may be an additive for providing the electrical conductivity of the resin composite, but is not particularly limited as long as it may be generally used. According to an example, a carbon material may be used as the electroconductive fillers. Examples of such a carbon material may be carbon nanotubes (CNTs), carbon black, graphite, graphene, and carbon fibers, one of which may be used alone, or two or more of which may be combined with each other for use. More desirably, the CNTs may be used.

The impact modifier may be added to compensate for impact resistance that may be deteriorated by the inclusion of the electroconductive filler. The impact modifier may be present as a domain in the matrix resin. The smaller the domain in the matrix is, and the more uniform the distribution of the domain is, the more the impact resistance of the matrix resin is increased.

According to an example, the impact modifier may be present in the matrix resin in the form of the domain. For example, the impact modifier may be present in a particle state, in which domains may be dispersed while being spaced apart from one another.

The domains of the impact modifier may be desirably present in the matrix resin, while having an average particle size of 5 μm or less (excluding 0). The impact modifier may be uniformly dispersed in the resin composite in the form of the domain having small particles as described above, thus contributing to an increase in the impact resistance of the resin composite. The domains may have, for example, an average particle size of 1 μm to 5 μm, 2 μm to 4 μm.

The size of the domains may be measured using various methods, and according to an example, five Izod impact specimens (ASTM D256) may be fractured in liquid nitrogen, 10 SEM images of fractured surfaces of the fractured specimens may be randomly captured (×5K magnification), respectively, and the size of the domain in all of the total of 50 images may be averaged, and the average value may be used.

This may not mean that a domain having a particle size of 5 μm or greater is not completely present in the resin composite, and that the domain having a particle size of 5 μm or greater may be present in a portion of the resin composite. However, the domains having a particle size of 5 μm or greater may be desirably limited to accounting for 10 wt% of the entire domains. It may be desirable that wt% of the domains having a particle size of 5 μm or greater be lesser. For example, it may be desirable that the domains having a particle size of 5 μm or greater be included in an amount of 5 wt% or less, 3 wt% or less, 1 wt% or less, or 0.5 wt% or less, and it may be most desirable that the domain be not present in the resin composite.

When the domains having a particle size of 5 μm or greater is included in an amount of 10 wt% or greater, compatibility between the matrix resin and the impact modifier in the resin composite may be poor, and thus the domains may be nonuniformly distributed and mechanical strength may be significantly reduced. Further, property deviation of a resin composite molded article may be undesirably increased.

Moreover, it may be desirable that standard deviation of the size of the domains be lesser and be 3 μm or less. For example, the standard deviation may be 3 μm or less, 2 μm or less, 1 μm or less, or 0 μm.

The matrix resin and the impact modifier, as a resin forming the resin composite according to an example, may desirably have different affinity with the electroconductive filler. Further, the matrix resin may desirably have greater affinity with the electroconductive filler, as compared with the impact modifier.

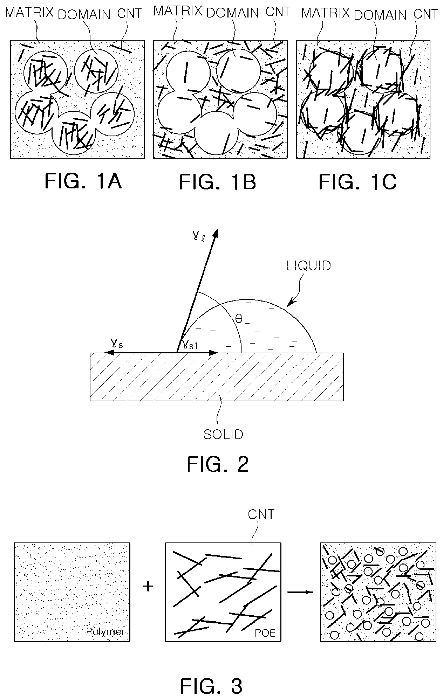

An aspect, in which the electroconductive fillers are present in the resin composite including the matrix resin and the impact modifier, is conceptually illustrated in FIG. 1. The electroconductive fillers may be desirable for providing excellent electrical conductivity through being uniformly dispersed in the matrix and forming a network with each other. However, as illustrated in FIG. 1A, the impact modifier may form the domains in the matrix resin, and when the electroconductive fillers are mainly present in the domains of the impact modifier, the electroconductive fillers may be undesirable to exhibit electrical conductivity because it may not form a network.

In contrast, when the matrix resin has greater affinity with the electroconductive fillers, as compared with of the impact modifier, the electroconductive fillers may be primarily located in the matrix resin having the greater affinity, as illustrated in FIG. 1B, or may be located at an interface between the matrix resin and the domains of impact modifier, as illustrated in FIG. 1C. When the electroconductive fillers is present in the above-mentioned form, the electroconductive fillers may form the network with each other to exhibit excellent electrical conductivity.

Thus, the affinity of the matrix resin with the electroconductive fillers according to an example may be desirably greater than that of the impact modifier therewith. The affinity may be represented by interfacial energy between the matrix resin and the impact modifier with respect to the electroconductive fillers, and the higher the interfacial energy is, the lower the affinity is.

Interfacial energy of a material may be determined by the sum of forces between various different atoms or molecules on the surface of the material, and may be divided into a polar component and a nonpolar (dispersion) component. Hence, interfacial energy may be measured using a contact angle measurement method and the following equation. In this case, two solutions of deionized water (DI) water and diiodomethane may be used.

$$\frac{\gamma_l(1+\cos\theta)}{2\sqrt{\gamma_l^d}} = \sqrt{\gamma_s^p}\left(\frac{\sqrt{\gamma_l^p}}{\sqrt{\gamma_l^d}}\right) + \sqrt{\gamma_s^d}.$$

$$\gamma_{sl} = \gamma_s + \gamma_l - 2\left(\gamma_l^d\gamma_s^d\right)^{1/2} - 2\left(\gamma_l^p\gamma_s^p\right)^{1/2}$$

$$\gamma_s = \gamma_l \cdot \cos\theta + \gamma_{sl} \quad (Young\ equation)$$

Here, $\theta$ is a contact angle; $\gamma_s$ is solid surface free energy; $\gamma_l$ is liquid surface free energy; $\gamma_{sl}$ is solid/liquid interfacial free energy; and their schematic relationship is illustrated in FIG. 2 (In the above equation, p represents polar and d represents dispersion).

According to an example, 'the electroconductive filler being present at the interface between the matrix and the domain' means that a single electroconductive filler may be present across the domain and the matrix, that is, a portion of a single electroconductive filler may be present in the matrix and a portion of the remainder of the single electroconductive filler may be present in the domain, as illustrated in FIG. 1C, from a perspective of a single electroconductive filler.

An interval between adjacent domains of the impact modifier in the matrix resin may be changed according to the content of the impact modifier with respect to the matrix resin, and may not always be constant. Thus, the interval between the adjacent domains is not particularly limited. For example, when the content of the impact modifier forming the domains is low, the interval between the adjacent domains may be great, and when the size of the domains is small, the interval between the adjacent domains may be small. When the interval between the adjacent domains is represented as an average value, the interval may be, for example, 10 $\mu$m or less, or 2 $\mu$m or more and 5 $\mu$m or less. When the size of the domain is small and the interval between the adjacent domains is small, it may be determined that the domains are uniformly dispersed in the resin composite, and thus impact resistance may be further increased.

The electroconductive fillers according to an example may be desirably present in the matrix resin or at the interface between the matrix resin and the impact modifier. As described above, since the electroconductive fillers may provide excellent electrical conductivity of the resin composite by forming the network with each other, the electroconductive fillers, desirably, may be present in the matrix resin to form the network or may be present at the interface between the matrix resin and the impact modifier to form the network.

It may be desirable that, as far as possible, most electroconductive fillers be present in the matrix resin or at the interface in terms of obtaining excellent conductivity using a small amount of electroconductive fillers. However, this does not indicate that all of the electroconductive fillers are not present in the domains of the impact modifier, and 10 wt% or less of the electroconductive fillers such as CNTs may be present in the impact modifier.

The resin composite according to an example may be produced using behavior characteristics of the electroconductive fillers according to the affinity between the matrix resin or the impact modifier and electroconductive fillers.

As described above, according to an example, a polymer having high affinity with the electroconductive fillers may be used as the matrix resin, and a polymer having relatively low affinity with the electroconductive fillers, as compared with the matrix resin, may be used as the impact modifier.

In this case, when the resin composite is produced by blending and melt-mixing the above-mentioned three components, for example, the polymer for the matrix resin (hereinafter, also referred to as a "polymer"), the impact modifier, and the electroconductive fillers, the electroconductive fillers may be present in the matrix resin having high affinity therewith. However, the impact modifier may not form a uniform domains due to the compatibility problem with the polymer for the matrix resin, a large number of huge domains over 10 $\mu$m may be generated, and in some cases, the matrix resin and the impact modifier may only be present in continuous phase and may not form a domains, thus reducing impact resistance. Also, an extensive die swelling phenomenon may occur during extrusion of the impact modifier.

Accordingly, the present disclosure may propose producing a masterbatch by melt-mixing the impact modifier and the electroconductive fillers, and then melt-mixing the produced masterbatch with the polymer for the matrix resin.

When the masterbatch, including the impact modifier and the electroconductive fillers, is used, the electroconductive fillers included in the masterbatch may have high affinity with the polymer for the matrix resin, as compared with the impact modifier, and thus the electroconductive filler may migrate toward the polymer for the matrix resin.

Behavior of the electroconductive fillers as described above is conceptually illustrated in FIG. 3.

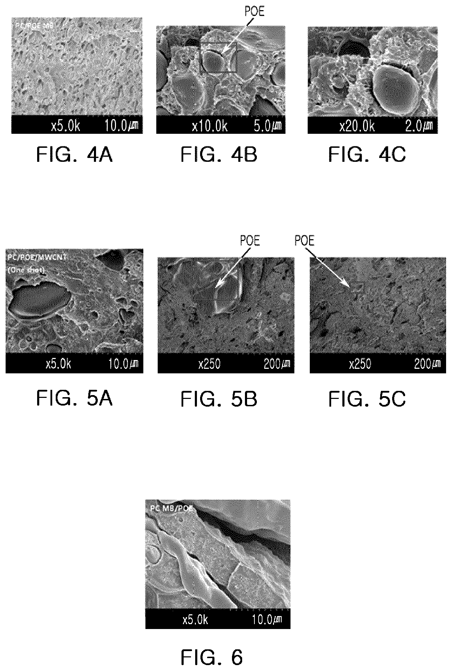

Accordingly, the electroconductive fillers may be present in the matrix resin or at the interface between the matrix resin and the POE to form the network with each other, the POE may be uniformly dispersed in the matrix while forming microdomains, and the resin composite, having morphology with uniform microdomains formed therein, may be obtained, as illustrated in FIG. 4A.

The reason that the impact modifier forms the microdomains has not been known, but as the impact modifier is impregnated with the electroconductive fillers such as CNTs or the like, viscosity of the impact modifier may be high, which is advantageous to form domains in the matrix resin. Also, the electroconductive fillers, such as CNTs or the like, present at the interface may prevent re-agglomeration of the domains in the migration process in which the electroconductive fillers may migrate toward the matrix resin having higher affinity therewith. Simultaneously, the electroconductive fillers, such as CNTs or the like that has migrated to the matrix resin, may increase viscosity of the matrix resin to thus increase shear stress, resulting in a reduction in the size of the domain of the impact modifier. Accordingly, the morphology of the resin composite may also be stably formed.

Unlike in an example, when the polymer for the matrix resin, the impact modifier, and the electroconductive fillers are simultaneously blended and melt-mixed, the polymer for the matrix resin, the impact modifier, and the electroconductive fillers may be blended with one other due to the affinity between the electroconductive fillers and the matrix resin, as described above. However, a function of refining the domain size of the impact modifier may not be performed, and due to the compatibility problem between the impact modifier and the matrix resin, the impact modifier may agglomerate to increase the domain size. This process is illustrated in FIG. 5A, in which the effect of improving impact resistance may be significantly reduced.

Also, when the polymer for the matrix resin and the electroconductive fillers are melt-mixed to form the masterbatch and then the masterbatch is blended with the impact modifier, the electroconductive fillers may be present in the matrix resin having high affinity as is, only the impact modifier may not stably form the domain due to the compatibility problem between the matrix resin and the impact modifier, and the matrix and the impact modifier may be also formed in continuous phase, thus significantly reducing the effect of improving impact resistance, as illustrated in FIG. 6.

Thus, it may be desirable that, in order to produce the resin composite according to an example, a composition including the polymer for the matrix resin and the masterbatch that includes the impact modifier and the electroconductive fillers, be used. The production of the masterbatch, including the impact modifier and the electroconductive fillers, is not particularly limited, the masterbatch may be produced using a common method of producing a masterbatch, and a generally used kneader or single- or twin-screw extruder may be used in the production of the masterbatch. For example, when the twin-screw extruder is used, the impact modifier may be supplied to a main supply unit of the twin-screw extruder and the electroconductive fillers may be supplied to a side supply unit thereof, or the impact modifier and the electroconductive fillers may be supplied to the main supply unit together, so that the impact modifier and the electroconductive fillers may be melt-mixed, thus producing the masterbatch.

Subsequently, melted strands extruded from a die of the twin-screw extruder may be cooled in a cooling water tank to obtain solidified strands, and a pelletized masterbatch may be obtained through a cutter. The shape of the masterbatch is not particularly limited, and the masterbatch may have, for example, a spherical shape or a chip shape.

Next, the resin composite may be produced by blending, and melt-mixing the produced masterbatch of the impact modifier and the electroconductive fillers (an impact modifier-electroconductive fillers masterbatch) with the polymer for the matrix resin.

Further, the impact modifier-electroconductive fillers masterbatch and the matrix resin may be blended to produce a second masterbatch, that is, an impact modifier-electroconductive fillers-polymer for a matrix resin masterbatch, and then an electroconductive resin composite according to an example may also be produced by blending and melt-mixing the second masterbatch with the polymer for the matrix resin.

In this case, the second masterbatch may be adjusted to a desired content ratio by further adding the electroconductive fillers such as CNTs or the like together with the polymer for the matrix resin in the process of producing the second masterbatch, as desired.

As described above, a chance to uniformly disperse the electroconductive fillers in the polymer for the matrix resin may be additionally provided by adding a melt-mixing process and the resulting extrusion process when the second masterbatch is additionally produced, and the effect of distributing more uniformly the electroconductive fillers such as CNTs or the like and the domains may be obtained. For example, in the above-mentioned melt-mixing process, the electroconductive fillers included in the masterbatch may migrate toward the matrix resin having high affinity, as compared with the impact modifier, and thus the electroconductive fillers may be located in the matrix resin or at the interface between the matrix resin and the impact modifier. Also, the additionally added electroconductive fillers may be dispersed in the matrix resin.

In the composition, the masterbatch of the impact modifier and the electroconductive fillers may be adjusted, depending on electrical conductivity and impact resistance required for the resin composite, is not particularly limited, and may include the electroconductive fillers in an amount of 1 wt% to 50 wt%, based on 100 wt% of the masterbatch. For example, based on 100 wt% of the masterbatch, the electroconductive fillers may be included in an amount of 5 wt% to 40 wt%, 5 wt% to 30 wt%, 5 wt% to 25 wt%, 10 wt% to 30 wt%, 10 wt% to 25 wt%, or 10 wt% to 20 wt%.

The polymer for the matrix resin and the masterbatch may include the masterbatch in an amount of 0.1 wt% to 50 wt%, based on the total weight of the polymer for the matrix resin and the masterbatch. For example, the polymer for the matrix resin and the masterbatch may include the masterbatch in an amount of 1 wt% to 50 wt%, 1 wt% to 45 wt%, 5 wt% to 45 wt%, 5 wt% to 40 wt%, 5 wt% to 30 wt%, 5 wt% to 25 wt%, 10 wt% to 30 wt%, 10 wt% to 25 wt% or 15 wt% to 25 wt%, based on the total weight of the polymer for the matrix resin and the masterbatch.

The composition may further include an additive commonly added to the resin composition, as needed. The additive, which may be added to the composition according to an example, is not particularly limited, and examples of the additive may be a reinforcing filler for reinforcing strength, a dispersant for improving CNT dispersibility, a compatibilizer for improving resin compatibility, an antioxidant, and an ultraviolet light stabilizer. Also, in consideration of physical properties or the like required for the resin composite, the composition may further include other resins other than the matrix resin, as necessary.

The reinforcing filler is not particularly limited as long as it is generally used in the resin composition, and examples of the reinforcing filler may be glass fibers, talc, calcium carbonate, and clay.

The resin composite obtained according to an example may include 1 wt% to 40 wt% of the impact modifier, 0.1 wt% to 20 wt% of the electroconductive fillers, and the remainder of the polymer for the matrix resin, based on 100 wt% of the polymer for the matrix resin, the impact modifier, and the electroconductive filler. For example, the resin composite may include 2 wt% to 20 wt% of the impact modifier, 0.5 wt% to 5 wt% of the electroconductive filler, and the remainder of the polymer for the matrix resin.

The resin composite obtained according to an example may have different Izod impact strength according to the amounts of impact modifier and electroconductive fillers used when the Izod impact strength of the resin composite is measured using notched Izod. However, when the amounts of the impact modifier and the electroconductive fillers are the same, the resin composite may have improved impact resistance from a minimum of 10% and to a maximum of 600%, as compared with the resin composite produced by simultaneously adding the respective components. For example, the resin composite according to an example may have a notched Izod impact strength of 10 kgfcm/cm to 65 kgfcm/cm.

Further, the resin composite according to an example may have the above-mentioned impact strength, and may have an electrical resistance value of $1.0 \times 10^1$ to $1.0 \times 10^9$, more preferably $1.0 \times 10^1$ to $1.0 \times 10^6$.

## Examples

Hereinafter, the present disclosure will be described in more detail with reference to the following Examples 1 to 7. However, Examples 1 to 7 are for illustrative purposes only, and the invention is not intended to be limited by these Examples 1 to 7.

## Examples 1 to 7

A POE/multi-walled CNT (MWCNT) masterbatch was produced by supplying POE (SK Global Chemical Co., Ltd., Solumer 875L) as an impact modifier to a main feeder of a twin-screw extruder having conditions: 40Φ; L/D=48; and the size of total 12 barrels, supplying MWCNT (a wall number of 7 to 10, a purity of 84%, and an aspect ratio of 350) to a side feeder thereof as an electroconductive filler, and blending, melt-mixing and extruding the supplied impact modifier and electroconductive fillers.

Thereafter, an injection molded article was produced by melt-mixing a polycarbonate resin (PC) (Lotte Chemical Corporation, HOPELEX PC-1220) as a polymer for a matrix resin, and the POE/MWCNT masterbatch with the the twin-screw extruder.

Here, the contents of the PC, the POE, and the MWCNT were adjusted to content ratios illustrated in Table 1.

With respect to the produced injection molded article, tensile strength (ASTM D 638), flexural modulus (ASTM D 790), impact strength (ASTM D 256), and surface electrical resistance (JIS K7194) were measured, and the resulting measurements are illustrated in Table 3.

Image of the surface of the injection molded article obtained according to Example 2 were captured using a scanning electron microscope (SEM), and the resulting images are provided in FIGs. 4A, 4B and 4C.

**Comparative Example 1**

PC, POE, and MWCNT were simultaneously blended, melt-mixing at content ratios illustrated in Table 2 to produce an injection molded article.

With respect to the produced injection molded article, the same physical properties as Example 1 were measured, and the resulting measurements are illustrated in Table 4.

Images of the surface of the injection molded article obtained according to Comparative Example 1 were captured using an SEM, and the resulting images are illustrated in FIGs. 5A, 5B and 5c.

**Comparative Example 2**

As illustrated in Table 2, 100 wt% of a polycarbonate resin was prepared to produce an injection molded article.

With respect to the produced injection molded article, the same physical properties as Example 1 were measured, and the resulting measurements are illustrated in Table 4.

**Comparative Example 3**

As illustrated in Table 2, 97 wt% of a polycarbonate resin and 3 wt% of CNTs were directly blended and melt-mixed, based on 100 wt% of a resin composition to produce an injection molded article.

With respect to the produced injection molded article, the same physical properties as Example 1 were measured, and the resulting measurements are illustrated in Table 4.

**Comparative Example 4**

A PC/MWCNT masterbatch was produced by supplying PC as a matrix resin to the main feeder of the same twin-screw extruder as Example 1, supplying MWCNT as an electroconductive filler to the side feeder thereof, and melt-mixing and extruding the supplied PC and MWCNT.

An injection molded article was produced by blending and melt-mixing POE as an impact modifier and the PC/MWCNT masterbatch with the same equipment.

Here, the employed PC, POE, and MWCNT, and the contents thereof are the same as Example 1, as illustrated in Table 2.

With respect to the produced injection molded article, the same physical properties as Example 1 were measured, and the resulting measurements are illustrated in Table 4.

Also, an image of the surface of the injection molded article obtained according to Comparative Example 4 was captured using an SEM, and the resulting image is illustrated in FIG. 6.

As for a domain size of Tables 3 and 4, the same five Izod impact specimens (ASTM D256) were fractured in liquid nitrogen, 10 images of the Izod impact specimens were randomly captured, respectively, in 5k ($\times$5000) magnification using an SEM, domain sizes in the total of 50 SEM images were measured, and the domain sizes were averaged and are provided in Tables 3 and 4. Here, when the domain did not have a circular shape, the domain size was measured based on the maximum distance.

[Table 1]

|  | Example 1 | Example 2 | Example 3 | Example 4 | Example 5 | Example 6 | Example 7 |
|---|---|---|---|---|---|---|---|
| PC (wt%) | 80 | 80 | 94 | 92 | 87 | 87 | 87 |
| POE (wt%) | 17.4 | 17 | 3 | 5 | 10 | 9.5 | 9 |
| CNT (wt%) | 2.6 | 3 | 3 | 3 | 3 | 0.5 | 1 |

[Table 2]

|  | Comparative Example 1 | Comparative Example 2 | Comparative Example 3 | Comparative Example 4 |
|---|---|---|---|---|
| PC (wt%) | 80 | 100 | 97 | 80 |
| POE (wt%) | 17 | 0 | 0 | 17 |
| CNT (wt%) | 3 | 0 | 3 | 3 |

[Table 3]

| | | Unit | Example 1 | Example 2 | Example 3 | Example 4 | Example 5 | Example 6 | Example 7 |
|---|---|---|---|---|---|---|---|---|---|
| Tensile Strength | Stress (Yield) | $kgf/cm^2$ | 456.6 | 443.5 | 603.5 | 588.0 | 513.9 | 521.7 | 525.3 |
| | | MPa | 44.8 | 43.5 | 59.2 | 57.7 | 50.4 | 51.2 | 51.5 |
| | Stress (Fracture) | $kgf/cm^2$ | 309.4 | 320.2 | 474.7 | 476.7 | 504.4 | 464.5 | 476.9 |
| | | MPa | 30.3 | 31.4 | 46.6 | 46.7 | 49.5 | 45.6 | 46.8 |
| | Elongation (Fracture) | % | 40.2 | 6.7 | 17.9 | 13.4 | 97.7 | 111.7 | 91 |
| Flexural Modulus | Modulus | $kgf/cm^2$ | 20927 | 20870 | 26151 | 25864 | 22073 | 21415 | 22048 |
| | | MPa | 2052. 2 | 2046. 6 | 2565 | 2536 | 2165 | 2100 | 2162 |
| Notched Izod Impact Strength | | kgfcm/cm | 65 | 53 | 16.9 | 24.6 | 54.3 | 59.2 | 59.2 |
| Resistance(4 Probe Method) | | $\Omega/sq$ | $1.2 \times 10^2$ | $1.4 \times 10^2$ | $1.2 \times 10^2$ | $1.3 \times 10^2$ | $1.2 \times 10^2$ | $4.2 \times 10^5$ | $1.2 \times 10^3$ |
| Domain Size | Average | $(\mu m)$ | 3.2 | 3.7 | 3.1 | 2.9 | 3.3 | 3.4 | 3.2 |
| | Standard | $(\mu m)$ | 0.9 | 0.8 | 0.6 | 0.5 | 0.6 | 0.7 | 0.9 |
| | Deviation | | | | | | | | |

[Table 4]

| | | Unit | Comparative Example 1 | Comparative Example 2 | Comparative Example 3 | Comparative Example 4 |
|---|---|---|---|---|---|---|
| Tensile Strength | Stress(Yield) | kgf/cm$^2$ | 457.5 | 631 | 384.4 | 357.3 |
| | | MPa | 44.9 | 61.9 | 37.7 | 35.0 |
| | Stress(Fracture) | kgf/cm$^2$ | 424.8 | 494.1 | 384.4 | 329.3 |
| | | MPa | 41.7 | 48.5 | 37.7 | 32.3 |
| | Elongation(Fracture) | % | 9.1 | 84.3 | 1.6 | 3.4 |
| Flexural Modulus | Modulus | kgf/cm$^2$ | 21407 | 26806 | 28489 | 16551 |
| | | MPa | 2099.3 | 2629 | 2793.8 | 1623 |
| Notched Izod Impact Strength | | kgfcm/cm | 11 | 65 | 7.4 | 15.4 |
| Resistance(4 Probe Method) | | Ω/sq | $1.3 \times 10^2$ | - | $1.1 \times 10^2$ | $1.5 \times 10^2$ |
| Domain Size | Average | (μm) | 5.2 | - | - | - |
| | Standard Deviation | (μm) | 3.6 | - | - | - |

In Table 3, in the case of Examples 1 to 7 in which a masterbatch is produced using a polyolefin elastomer and CNTs, and then the masterbatch is blended with a polycarbonate resin, impact strength of the injection molded article may be significantly increased.

In Table 4, the impact strength values approximate to that of the pure PC of Comparative Example 2, not including an electroconductive filler, are illustrated. However, the injection molded articles of Comparative Examples 1 and 4, including POE and CNTs in the same amount, may have a significantly reduced impact strength value.

From this, Examples 1 to 7 illustrate that the impact modifier may increase impact resistance by being uniformly distributed in the matrix.

Further, the SEM image of the surface of the injection molded article obtained according to Example 2 illustrates that the impact modifier may be uniformly distributed.

However, in FIG. 5 illustrating the surface of the injection molded article obtained according to Comparative Example 1, the CNTs may be mainly selectively present in the PC, the matrix, but the injection molded article of Comparative Example 1 may have the morphology in which the distribution and size of the POE domain are non-uniform, and thus the effect of improving impact resistance may be significantly reduced.

Further, in FIG. 6 illustrating the surface of the injection molded article obtained according to Comparative Example 4, the POE may be present in continuous phase, and thus the shape of a domain may not appear.

As set forth above, according to the examples, excellent electrical conductivity may be secured by selectively dispersing an electroconductive fillers in a matrix resin for a polymer or at an interface between the matrix resin for the polymer and an impact modifier.

Further, according to another example, electroconductive fillers may be uniformly dispersed in a matrix and at an interface between the matrix and domains in the form of a microparticle, thus suppressing agglomeration of the electroconductive fillers, and reducing the size of the domain. As a result, a reduction in impact strength due to the addition of the electroconductive fillers may be solved.

While exemplary embodiments have been shown and described above, it will be apparent to those skilled in the art that modifications and variations could be made without departing from the scope of the present invention, as defined by the appended claims.

**Claims**

1. An electroconductive resin composite, the composite comprising:

   a resin matrix;
   impact modifier domains dispersed in the matrix, the domains having an average particle size of 5 μm or less (excluding 0); and
   electroconductive fillers dispersed in the matrix.

2. The composite of claim 1, wherein the size distribution of the domains has a standard deviation of 3 $\mu$m or less.

3. The composite of claim 1, wherein, based on the total weight of the fillers, 90% or more of the fillers are present in the matrix or at an interface between the matrix and the domains.

4. The composite of any one of claims 1 to 3, wherein interfacial energy between the domains and the fillers is higher than interfacial energy between the matrix and the fillers.

5. The composite of claim 1, comprising 1 wt% to 40 wt% of the domains and 0.1 wt% to 20 wt% of the fillers based on the total weight of the composite.

6. The composite of claim 1, wherein the matrix includes at least one resin selected from the group consisting of polyamide, polycarbonate, polyacrylonitrile butadiene styrene, polymethyl metacrylate, polyphenylene sulfide and polyetheretherketone.

7. The composite of claim 1, having a notched Izod impact strength of 10 kgfcm/cm to 65 kgfcm/cm.

8. The composite of claim 1, wherein the domains include polyolefin elastomer.

9. The composite of claim 1, wherein the fillers are at least one selected from the group consisting of carbon nanotubes, carbon black, graphite, graphene and carbon fibers.

10. An electroconductive resin composition comprising:

   a resin; and
   a masterbatch including an impact modifier and electroconductive fillers,
   wherein, with respect to the electroconductive fillers, interfacial energy of the impact modifier is higher than interfacial energy of the polymer for the resin.

11. The electroconductive resin composition of claim 10, comprising 0.1 wt% to 50 wt% of the masterbatch based on the total weight of the composition, and wherein the masterbatch includes 1 wt% to 50 wt% of the electroconductive fillers based on the total weight of the masterbatch.

12. The electroconductive resin composition of claim 10, wherein the masterbatch further includes a polymer.

13. A method of producing an electroconductive resin composite, the method comprising:

   blending a masterbatch including an impact modifier and electroconductive filler with a resin to prepare an electroconductive resin composition; and
   melt-mixing the composition to prepare a composite including:

      a resin matrix including the resin;
      impact modifier domains including the impact modifier, the domains being dispersed in the matrix and having an average particle size of 5 $\mu$m or less; and
      electroconductive fillers dispersed in the composite.

14. The method of claim 13, further comprising:

   melt-mixing the impact modifier and the fillers, or the impact modifier, the fillers and a polymer to prepare the masterbatch.

15. The method of claim 13, wherein the composition includes 1 wt% to 40 wt% of the impact modifier and 0.1 wt% to 20 wt% of the fillers based on the total weight of the composition.

MATRIX DOMAIN CNT    MATRIX DOMAIN CNT    MATRIX DOMAIN CNT

FIG. 1A      FIG. 1B      FIG. 1C

$\gamma_\ell$

LIQUID

$\theta$

$\gamma_s$    $\gamma_{s1}$

SOLID

FIG. 2

CNT

Polymer    POE

FIG. 3

EP 3 244 421 A1

FIG. 4A    FIG. 4B    FIG. 4C

FIG. 5A    FIG. 5B    FIG. 5C

FIG. 6

14

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/45098 A2 (GEN ELECTRIC [US]) 6 June 2002 (2002-06-06) * example 2 * * claims 1, 5, 10, 16-20,23-27 * * page 28, line 5 - line 14 * * figure 1 * * the whole document * | 1-15 | INV. H01B1/24 C08L23/10 C08L69/00 C08L23/16 C08L71/12 |
| X | WO 2015/105296 A1 (SAMSUNG SDI CO LTD [KR]) 16 July 2015 (2015-07-16) * claims 1-13 * * examples 1-4; table 1 * * the whole document * | 1-15 | |
| X,P | & EP 3 093 853 A1 (SAMSUNG SDI CO LTD [KR]) 16 November 2016 (2016-11-16) * table 1 * * examples 1-4 * * the whole document * | 1-15 | |
| X | US 6 221 283 B1 (DHARMARAJAN RAJA [US] ET AL) 24 April 2001 (2001-04-24) * claims 1-18 * * table 1 * * examples 1,2 * * the whole document * | 1-15 | TECHNICAL FIELDS SEARCHED (IPC) H01B C08L |
| A | WO 00/68299 A2 (GEN ELECTRIC [US]) 16 November 2000 (2000-11-16) * claims 1-16 * | 1-15 | |
| A | US 2015/187458 A1 (HONG CHANG MIN [KR] ET AL) 2 July 2015 (2015-07-02) * claims 1-12 * * paragraph [0089] * * the whole document * | 1-15 | |

-/--

The present search report has been drawn up for all claims

| Place of search | Date of completion of the search | Examiner |
|---|---|---|
| The Hague | 21 July 2017 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 17 16 2733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | J. R. CAMPBELL ET AL: "Poly(Phenylene oxide)/polyamide blends via reactive extrusion", POLYMER ENGINEERING AND SCIENCE., vol. 30, no. 17, 1 September 1990 (1990-09-01), pages 1056-1062, XP055392921, US ISSN: 0032-3888, DOI: 10.1002/pen.760301709 * the whole document * ----- | 1-15 | |

TECHNICAL FIELDS
SEARCHED (IPC)

The present search report has been drawn up for all claims

| Place of search | Date of completion of the search | Examiner |
|---|---|---|
| The Hague | 21 July 2017 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 2733

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2017

| Patent document cited in search report | | | Publication date | Patent family member(s) | | | Publication date |
|---|---|---|---|---|---|---|---|
| WO 0245098 | A2 | | 06-06-2002 | AU | 3076702 | A | 11-06-2002 |
| | | | | EP | 1342246 | A2 | 10-09-2003 |
| | | | | JP | 2004514782 | A | 20-05-2004 |
| | | | | US | 2002099128 | A1 | 25-07-2002 |
| | | | | WO | 0245098 | A2 | 06-06-2002 |
| WO 2015105296 | A1 | | 16-07-2015 | CN | 105874543 | A | 17-08-2016 |
| | | | | EP | 3093853 | A1 | 16-11-2016 |
| | | | | KR | 20150083320 | A | 17-07-2015 |
| | | | | US | 2016326369 | A1 | 10-11-2016 |
| | | | | WO | 2015105296 | A1 | 16-07-2015 |
| US 6221283 | B1 | | 24-04-2001 | AT | 424614 | T | 15-03-2009 |
| | | | | EP | 2071585 | A1 | 17-06-2009 |
| | | | | US | 6221283 | B1 | 24-04-2001 |
| WO 0068299 | A2 | | 16-11-2000 | CN | 1364299 | A | 14-08-2002 |
| | | | | EP | 1190421 | A2 | 27-03-2002 |
| | | | | JP | 2002544308 | A | 24-12-2002 |
| | | | | WO | 0068299 | A2 | 16-11-2000 |
| US 2015187458 | A1 | | 02-07-2015 | KR | 20150077937 | A | 08-07-2015 |
| | | | | US | 2015187458 | A1 | 02-07-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160037770

- KR 1020160126580